# NEUE EUROPÄISCHE PATENTSCHRIFT

(11) **EP 0 477 397 B2**
(45) Veröffentlichungstag und Bekanntmachung des Hinweises auf die Entscheidung über den Einspruch: **01.09.1999**
(45) Hinweis auf die Patenterteilung: 22.11.1995
(21) Anmeldenummer: 90118384.8
(22) Anmeldetag: 25.09.1990
(51) Int. Cl.: G05B 19/41

(54) **Verfahren zur Ermittlung von Werkzeugbahnkonturen bei numerisch gesteuerten Maschinen**
Method to determine the contour of the machine tool path by a numerically controlled machine
Procédé pour déterminer le contour de trajectoire de l'outil pour machines à commande numérique

(43) Veröffentlichungstag der Anmeldung: 01.04.1992
(73) Patentinhaber: Dr. Johannes Heidenhain GmbH, 83292 Traunreut (DE)
(72) Erfinder: Körner, Klaus-Dieter, Dipl.-Phys., D-8220 Traunstein (DE)

(56) Entgegenhaltungen:
- EP-B- 254 884
- US-A- 3 629 558

## Beschreibung

Die Erfindung betrifft ein Verfahren zur Ermittlung von Werkzeugbahn-Konturen bei numerisch gesteuerten Maschinen gemäß dem Oberbegriff des Anspruches 1.

Ein Verfahren zum Bestimmen von die Steuerung eines Roboters leitenden Raumpunkten ist aus der EP 0 254 884 B1 bekannt. Hierbei wird ein abschnittsweises Linearisieren einer gekrümmten Kontur beschrieben, bei dem zunächst eine Reihe von Punkten entlang der Kontur bestimmt werden. Die Koordinaten sämtlicher Orte der idealen Bewegungsbahn werden daraufhin abgespeichert und der Ausgangsort als Startpunkt des ersten linearen Bewegungsabschnittes und somit als erster Raumpunkt mit seinen Koordinaten gespeichert. Darauf wird der dem aktuellen Startpunkt unmittelbar folgende Ort der idealen Bewegungsbahn als Hilfspunkt zum vorläufigen Festlegen der räumlichen Lage des relevanten linearen Bewegungsabschnittes herangezogen. Die räumliche Lage des relevanten linearen Bewegungsabschnittes wird hierbei durch die Koordinaten des jeweiligen Startpunktes und die Koordinaten des aktuellen Hilfspunktes definiert. Anschließend wird der Abstand des im weiteren folgenden Ortes der idealen Bewegungsbahn zu der den jeweiligen linearen Bewegungsabschnitt bezeichneten Geraden ermittelt. Sofern nunmehr dieser Abstand größer als die vorgegebene Lagetoleranz ist, wird der vorangehende Hilfspunkt zum Endpunkt dieses linearen Bewegungsabschnittes und zum Startpunkt eines folgenden linearen Bewegungsabschnittes. Die Koordinaten dieses Raumpunktes werden daraufhin gespeichert und die vorherigen Verfahrensschritte beginnen erneut. Erweist sich bei der erwähnten Überprüfung, daß der Abstand kleiner ist als die vorgebbare Lagetoleranz, so wird der aktuelle Hilfspunkt auf die Strecke zwischen seiner bisherigen Lage und dem nächstfolgenden Ort der idealen Bewegungsbahn verlegt, wobei je nach Anzahl der vom letzten Startpunkt aus berücksichtigten Feinwegabschnitte diese Strecke entsprechend dieser Anzahl geteilt wird und der Hilfspunkt in seiner Lage auf den den bisherigen Hilfspunkten nächstliegenden Teilungspunkt verlegt wird.

Aus der Druckschrift US-A-3,629,558 ist desweiteren ein Verfahren für die Bearbeitung von Werkstücken bekannt, das offenbart, gekrümmte Konturen eines Werkstückes abschnittsweise zu linearisieren. Hierbei werden aus den über ein Scanning-Verfahren erfaßten Koordinaten einer Werkstückoberfläche bestimmte Punkte ausgewählt, die abschnittsweise über Geraden verbunden werden, wodurch sich die Werkstückkontur mit einer geringeren Datenmenge beschreiben läßt. Zu diesem Zweck wird überprüft, ob in einer bestimmten Koordinatenrichtung der Abstand eines Punktes zu einem vorherigen Punkt größer oder kleiner als ein Referenzabstand ist. Je nach dem Ergebnis dieser Überprüfung wird der Punkt übernommen um die Werstückoberfläche zu beschreiben oder nicht.

Bei numerischen Werkzeugmaschinen ist es allgemein bekannt, die Daten für die Herstellung eines Werkstückes aus einem Werkstückrohling in Form von Werkzeugbahn-Daten durch ein NC-Programm zu bestimmen. Dazu ist erforderlich, die Kontur des herzustellenden Werkstückes mit dem Werkzeugradius zu korrigieren, da für die Maschine nicht die Werkstückkontur, sondern die Werzeugmittelpunkt-Bahn relevant ist.

Für NC-Steuerungen ist das Berechnen der korrigierten Schnittkontur eines beliebigen Körpers eine komplexe und rechenintensive Aufgabe.

Die Schwierigkeiten liegen hier schon in der Definition eines komplexen Körpers und seiner Oberfläche und dann in der Berechnung einer Äquidistanten für die Fräserradiuskorrektur unter Berücksichtigung möglicher Kollisionen bei vorgegebener Genauigkeit. Entsprechend hoch ist der erforderliche Einsatz an Rechenkapazität und Speicherkapazität. Um solche Berechnungen durchzuführen, ist auf dem Rechner der NC-Steuerung zusätzliche Hard- und Software notwendig. Dazu gehören beispielsweise spezielle Arithmetikprozessoren, aber auch geometrische Verfahren und Darstellungsmethoden zur Beschreibung von Freiformflächen.

Relativ komplexe Körperkonturen lassen sich aus einfachen Konturstücken wie Kreisen und Geraden zusammenstellen. Die Werkzeugradiuskorrekturen lassen sich an diesen einfachen Konturen leicht durchführen, jedoch ist es problematisch, aus den einzelnen korrigierten Konturen die resultierende Werkzeugbahn zu ermitteln, da es bei den einzeln korrigierten Konturen durch deren Zusammenfassung zu Überschneidungen kommt.

Um die Ermittlung der Werkzeugbahn-Konturen bzw. deren Bahndaten zu vereinfachen, wird bereits an einer einfachen 2d-Kontur eine Fräserbahnkorrektur vorgenommen. Diese Werkzeugbahn-Kontur bildet eine korrigierte 2d-Kontur. Die korrigierte 2d-Kontur wird entlang eines Vektors beispielsweise translatorisch verschoben und auf diese Weise ein korrigiertes 3d-Objekt gebildet. Die Oberflächen eines korrigierten Körpers beschreiben äquidistante Flächen zu den Oberflächen des Grundkörpers.

Die Zusammensetzung der gewünschten Körper zum herzustellenden Werkstück erfolgt anhand der bereits korrigierten Körper, so daß die Werkzeugbahn-Konturen sich mit den Schnittlinien eines zusammengesetzten - bereits korrigierten - Gesamtkörpers decken.

Nun werden die Schnittlinien zwischen den korrigierten Oberflächen und der jeweiligen Bearbeitungsebene berechnet. Dies sind bei Translationskörpern Geradenabschnitte und bei Rotationskörpern die Kurven von allgemeinen Kegel- bzw. Zylinderschnitten.

Der Erfindung liegt die Aufgabe zugrunde, die Bearbeitung dieser allgemeinen Kurven zu vereinfachen.

Diese Aufgabe wird durch ein Verfahren mit den Merkmalen des Anspruches 1 gelöst.

Die Vorteile des erfindungsgemäßen Verfahrens liegen darin, daß die Folge der erzeugten Kurven linearisiert wird, und zwar unter Berücksichtigung der durch die Maschine vorgegebenen Auflösung.

Ist z. B. eine Kurve zweiter Ordnung (Kegelschnitt) gegeben (y² = a1 · x² + a2 · x + a3), dann wird diese durch eine Folge von Geradenabschnitte angenähert. Um die Schrittweite (die Länge eines Interpolationsintervalls oder auch Linearisierungs-Abschnittes)
a) nicht von vorn herein und
b) nicht für die ganze Kurve festlegen zu müssen, wurde das erfindungsgemäße Verfahren entwickelt, das ohne diese Voraussetzungen auskommt.

In besonders vorteilhafter Weise ist dazu ein Verfahren geeignet, mit dem in Abhängigkeit von der tatsächlichen Krümmung der Kurve eine Interpolation mit 3d-Geradenabschnitten erzeugt wird, wodurch Linearisierungs-Abschnitte entstehen. Dadurch ist gewährleistet, daß immer nur soviele Linearisierungs-Abschnitte erzeugt werden, wie zur Einhaltung des maximalen Fehlers notwendig sind, was zu einer starken Reduktion der Datenmengen und somit zur Einsparung von Speicherplatz führt.

Die Folge der auf diese Art und Weise berechneten Linearisierungs-Abschnitte ergibt die korrigierte Schnittkontur.

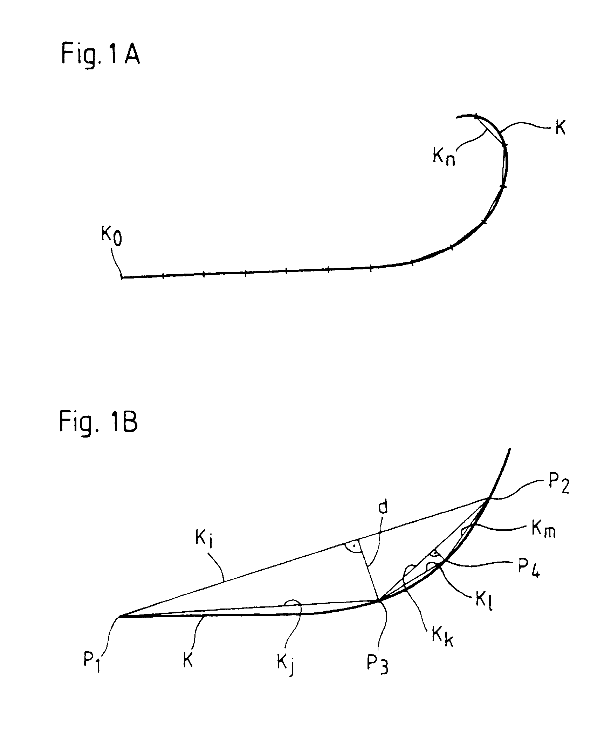

Dieses Verfahren wird nachstehend anhand der Figuren 1A und 1B beschrieben.

Es zeigt
- Figur 1A: eine Fräserbahn-Kontur;
- Figur 1B: einen vergrößerten Abschnitt der Fräserbahn-Kontur und
- Figur 2: ein Flußdiagramm.

In Figur 1A ist ein gekrümmter Verlauf einer Kontur K gezeigt, der gemäß dem Stand der Technik durch Geradenabschnitte (ki (i = 0 ... n)) eines fest vorgegebenen Rasters angenähert von der Fräsmaschine erzeugt wird. Da die Weite der Geradenabschnitte festliegt, nimmt die Abweichung der tatsächlich erzeugten Kontur von der gewünschten bzw. idealen Kontur K mit zunehmender Krümmung dieser Kontur K zu.

Besonders deutlich wird dies durch die übertriebene Darstellung in Figur 1B. Dort ist ein Ausschnitt der Kontur K aus Figur 1A gezeigt.

Die Kontur K wird mit Geradenabschnitten erzeugt, von denen hier nur derAbschnitt Ki dargestellt ist. Ein nicht dargestellter Fräser würde auf diesem Abschnitt Ki die Punkte P1 und P2 der Kontur K durch seine Fräserbahn verbinden.

Das Verfahren kann die vorstehend definierten Kurven K mit beliebiger Genauigkeit interpolieren. Die Genauigkeit wird durch eine skalare Größe vorgegeben und gibt die maximale Abweichung eines Geradenabschnitts von der Kurve K an.

Die maximale Abweichung ist dabei definiert, als die Länge des Lotes (d), die sich aus dem Schnitt des Lotes (d) von der Interpolationsgeraden zwischen P1 und P2 mit der Kurve K selbst und der Interpolationsgeraden Ki ergibt (Figur 1B).

Um die Annäherung an die gewünschte Kontur K zu verbessern, wird also das Lot von dem Geradenabschnitt Ki auf die Kontur K gefällt und der Ort der größten Abweichung festgestellt Der Schnittpunkt der Kontur K mit dem Lot bestimmt einen Punkt P3.

Die Schrittweite wird in vorteilhafter Weise dynamisch bestimmt, d. h. die Anzahl der Linearisierungs-Abschnitte hängt von den konkreten Eigenschaften der Kurve K ab, d. h. der Kurvenparameter (a1, a2, a3).

Die NC-Steuerung, mit deren Hilfe der Punkt P3 ermittelt wurde, legt als neue Linearisierungs-Abschnitte die Geraden Kj und Kk fest, mit denen die Punkte P1 und P3 sowie P3 und P2 verbunden werden. Es zeigt sich, daß die sogenannte Linearisierung durch die neuen Geraden Kj und Kk schon deutlich bessere Annäherung an die Kontur K gebracht hat.

Wenn die gleiche Verfahrensweise auch an dem neuen Linearisierungs-Abschnitt Kk durchgeführt wird, nähern sich die dadurch erzeugten weiteren Linearisierungs-Abschnitte Kl und Km schon sehr stark an den realen Konturenverlauf K an. Es ist ersichtlich, daß mit diesem Verfahren zur krümmungsabhängigen Linearisierung auch die Linearisierungs-Abschnitts-Länge krümmungsabhängig wird. Mit diesem Verfahren wird die Bahn des Fräsers an die Idealkontur in höchstem Maße angeglichen.

Durch Verwendung dieses rekursiven Algorithmus, derdie Eigenheiten der Problemstellung ausnutzt, wird der Verwaltungs- und Speicheraufwand bei der Erzeugung der interpolierenden Linearisierungs-Abschnitte optimiert.

Das Verfahren zeichnet sich durch eine schnelle Konvergenz auf die Lösung aus, da die Interpolation automatisch in den Bereich der Kurve K wandert der am stärksten gekrümmt ist, und somit die meisten Linearisierungs-Abschnitte zur Interpolation erfordert

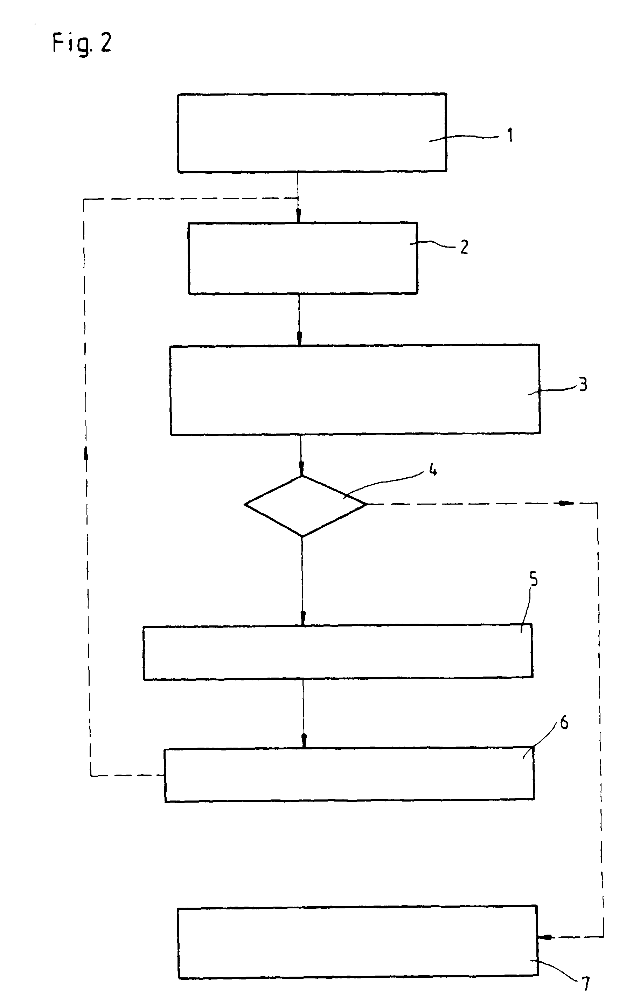

Ein in Figur 2 dargestelltes Flußdiagramm gibt die Verfahrensschritte in Form von Ablaufblöcken an:

Zuerst werden gemäß 1 die Parameter der Kurve K und des Interpolationsintervalles Ko = [Po, Po'] aufgenommen. Anschließend werden die Daten des aktuellen Intervalles nach 2 übergeben. Gemäß Figur 1B sind dies das Intervall Ki mit den Anfangs- und Endpunkten P1 und P2. Im Schritt 3 wird die maximale Abweichung in dem aktuellen Intervall Ki errechnet und der Schnittpunkt des Lotes d mit der Kurve K ermittelt. Die Koordinaten des neuen Punktes P3 (Schnittpunkt Lot d / Kurve K) werden bestimmt.

Anschließend wird in Schritt 4 die Entscheidung getroffen, ob die maximale Abweichung (Lot d) kleiner ist als ein vorbestimmbarer Grenzwert. Ist der Betrag des Lotes d kleiner als dieser Grenzwert, dann ist das aktuelle Intervall Ki zulässig, und seine Anfangs- und Endpunkte P1 und P2 sind zulässige Punkte der Geraden Ki; der Fräser kann somit diese Punkte P1 und P2 anfahren.

Ergibt der Vergleich für die Entscheidung, daß die Abweichung (Lot d) größer ist, als der Grenzwert, so werden gemäß 5 zwei neue Intervalle Kj bzw. Kk definiert, deren Anfangs- und Endpunkte P1 und P3 bzw. P3 und P2 sind.

Im Schritt 6 wird nun der vorbeschriebene Algorithmus auf das "linke" Intervall Kj und das "rechte" Intervall Kk angewendet u.s.w..

Durch diese rekursive Anwendung des Verfahrens entstehen gemäß Figur 1B weitere Intervalle Kl und Km, bis daß die Kurve K genügend angenähert ist.

## Patentansprüche

1. Verfahren für die Bearbeitung von Werkstücken durch Verknüpfung von Werkstück-Rohlingsdaten mit Werkzeugbahn-Daten zu mathematisch beschriebenen Schnittlinien mit Hilfe einer numerischen Steuerung, wobei gekrümmte Konturen (K) der Schnittlinien abschnittsweise linearisiert werden und die Länge der Linearisierungs-Abschnitte von der Stärke der Krümmung der Kontur (K) abhängig ist und die Anzahl der Linearisierungs-Abschnitte durch eine zulässige Abweichung der linearisierten Kontur von der gekrümmten Kontur (K) begrenzt wird, mit folgenden Verfahrensschritten:
a) zunächst werden die Parameter der gekrümmten Kontur (K) aufgenommen,
b) der Anfangs- (P1) und Endpunkt (P2) eines gewünschten Interpolationsintervalles auf der Kontur (K) wird bestimmt,
c) ein erster Linearisierungs-Abschnitt (Ki) in Form eines Geradenabschnittes wird zwischen den Anfangs- und Endpunkt (P1, P2) des Interpolationsintervalles gelegt,
d) die maximale Abweichung (d) des ersten Linearisierungs-Abschnittes (Ki) von der Kontur wird bestimmt, indem das Lot auf den ersten Linearisierungs-Abschnitt (Ki) gefällt wird und solange entlang des ersten Linearisierungs-Abschnittes (Ki) verschoben wird, bis die Strecke zwischen dem Schnittpunkt (P3) des Lotes (d) mit der Kontur (K) und dem ersten Linearisierungs-Abschnitt (Ki) maximal ist,
e) anschließend wird überprüft, ob die bestimmte maximale Abweichung (d) kleiner als ein vorbestimmter Grenzwert ist,
f) sofern die maximale Abweichung (d) größer als der vorbestimmte Grenzwert ist, werden zwei neue zweite und dritte Linearisierungs-Abschnitte (Kj, Kk) definiert, wobei der Anfangspunkt (P1) des zweiten Linearisierungs-Abschnittes (Kj) identisch mit dem Anfangspunkt (P1) des ersten Linearisierungs-Abschnittes (Ki) ist und der Endpunkt des zweiten Linearisierungs-Abschnittes (Kj) identisch mit dem vorher ermittelten Schnittpunkt (P3) des Lotes (d) mit der Kontur (P3) ist, während der Anfangspunkt (P3) des dritten Linearisierungs-Abschnittes (Kk) identisch mit dem Schnittpunkt (P3) des Lotes (d) mit der Kontur (K) ist und der Endpunkt (P2) des dritten Linearisierungs-Abschnittes (Kk) identisch mit dem Endpunkt (P2) des ersten Linearisierungs-Abschnittes (Ki) ist,
g) sofern die maximale Abweichung (d) im Verfahrensschritt e) größer als der vorbestimmte Grenzwert war, werden die Schritte c) bis f) solange wiederholt, bis für jeden Linearisierungs-Abschnitt (Ki, Kj, Kk, Kl, Km) die bestimmte maximale Abweichung (d) kleiner als der vorbestimmte Grenzwert ist,
h) sofern im Verfahrensschritt e) die maximale Abweichung (d) kleiner als der vorbestimmte Grenzwert war, werden Anfangs- und Endpunkt des aktuellen Interpolations-lntervalles als Linearisierungsabschnitt übernommen.

2. Verfahren nach Anspruch 1, wobei der Linearisierungs-Algorithmus rekursiv ist.

## Claims

1. A method of machining workpieces by combining workpiece blank data with tool path data to form mathematically described cutting lines with the aid of a numeric control, wherein curved contours (K) of the cutting lines are sectionally linearized, and the length of the linearization segments is dependent on the degree of curvature of the contour (K) and the number of linearization segments is limited by a permitted deviation of the linearized contour from the curved contour (K), with the following method steps:
a) the parameters of the curved contour (K) are first derived,
b) the start point (P1) and end point (P2) of a desired interpolation interval on the contour (K) are determined,
c) a first linearization segment (Ki) in the form of a straight segment is placed between the start and end points (P1, P2) of the interpolation interval,
d) the maximum deviation (d) of the first linearization segment (Ki) from the contour is determined, in that the perpendicular is dropped to the first linearization segment (Ki) and is displaced along the first linearization segment (Ki) until the path between the point of intersection (P3) of the perpendicular (d) with the contour (K) and the first linearization segment (Ki) is a maximum,
e) it is then checked whether the determined maximum deviation (d) is smaller than a predetermined limit value,
f) insofar as the maximum deviation (d) is greater than the predetermined limit value, two new second and third linearization segments (Kj, Kk) are defined, wherein the start point (P1) ofthe second linearization segment (Kj) is identical with the start point (P1) of the first linearization segment (Ki) and the end point of the second linearization segment (Kj) is identical with the previously determined point of intersection (P3) of the perpendicular (d) with the contour (K), while the start point (P3) of the third linearization segment (Kk) is identical with the point of intersection (P3) of the perpendicular (d) with the contour (K) and the end point (P2) of the third linearization segment (Kk) is identical with the end point (P2) of the first linearization segment (Ki),
g) insofar as the maximum deviation (d) in the method step e) is greater than the predetermined limit value, the steps c) to f) are repeated until the determined maximum deviation (d) is smaller than the predetermined limit value for each linearization segment (Ki, Kj, Kk, Kl, Km),
h) insofar as the maximum deviation (d) is smaller in method step e) than the predetermined limit value, start and end points of the current interpolation interval are adopted as a linearization segment.

2. A method according to claim 1, wherein the linearization algorithm is recursive.

## Revendications

1. Procédé pour l'usinage de pièces par combinaison au moyen d'une commande numérique de données d'ébauche de pièce et de données de trajectoire d'outil en vue d'obtenir des lignes de coupe définies mathématiquement, les profils (K) courbes des lignes de coupe étant linéarisés par segments successifs et la longueur des segments (Ki) de linéarisation étant fonction de l'importance de la courbure du profil (K) et le nombre des segments de linéarisation étant limité par un écart admissible (d) du profil linéarisé (Ki) par rapport au profil (K) courbe, présentant les étapes de procédé suivantes:
a) tout d'abord on enregistre les paramètres du profil courbe (K),
b) on détermine le point de début (P1) et le point de fin (P2) d'un intervalle d'interpolation souhaité sur le profil (K),
c) on trace un premier segment de linéarisation (Ki) sous la forme d'un segment de droite entre le point de début (P1) et le point de fin (P2) de l'intervalle d'interpolation,
d) on détermine l'écart maximal (d) du premier segment de linéarisation (Ki) par rapport au profil, en traçant la perpendiculaire au premier segment de linéarisation (Ki) et en déplaçant celle-ci le long du premier segment de linéarisation (Ki) jusqu'à ce que la distance entre le point d'intersection (P3) de la perpendiculaire (d) avec le profil (K) et le premier segment de linéarisation (Ki) soit maximale,
e) puis on contrôle si l'écart maximal (d) déterminé est inférieur à une valeur limite préétablie,
f) dans la mesure où l'écart maximal (d) est supérieur à la valeur limite préétablie, on définit deux nouveaux deuxième et troisième segments de linéarisation (Kj, Kk), le point de début (P1) du deuxième segment de linéarisation (Kj) étant identique au point de début (P1) du premier segment de linéarisation (Ki) et le point de fin du deuxième segment de linéarisation (Kj) étant identique au point d'intersection (P3) déterminé auparavant de la perpendiculaire (d) avec le profil (K), le point de début (P3) du troisième segment de linéarisation (Kk) étant identique au point d'intersection (P3) de la perpendiculaire (d) avec le profil (K) et le point de fin (P2) du troisième segment de linéarisation (Kk) étant identique au point de fin (P2) du premier segment de linéarisation (Ki),
g) dans la mesure où l'écart maximal (d) dans l'étape e) est supérieur à la valeur limite préétablie, on répète les étapes c) à f) jusqu'à ce que, pour chaque segment de linéarisation (Ki, Kj, Kk, Kl, Km), l'écart maximal (d) soit inférieur à la valeur limite préétablie,
h) dans la mesure où à l'étape e) l'écart maximal (d) était inférieur à la valeur limite préétablie, on prend comme segment de linéarisation les points de début et de fin de l'intervalle d'interpolation actuel

2. Procédé selon la revendication 1, caractérisé par le fait que l'algorithme de linéarisation est récursif.
